# EUROPEAN PATENT SPECIFICATION

(11) **EP 4 047 304 B1**
(45) Date of publication and mention of the grant of the patent: **20.12.2023**
(21) Application number: 21382134.1
(22) Date of filing: 19.02.2021
(51) Int. Cl.: G01B 11/24, G01B 5/004, H05B 7/085, H05B 7/10

(54) **MACHINE AND METHOD FOR THREE-DIMENSIONAL MEASUREMENT OF GRAPHITE ELECTRODES**
MASCHINE UND VERFAHREN ZUR DREIDIMENSIONALEN MESSUNG VON GRAPHITELEKTRODEN
MACHINE ET PROCÉDÉ DE MESURE TRIDIMENSIONNELLE D'ÉLECTRODES DE GRAPHITE

(43) Date of publication of application: 24.08.2022
(73) Proprietor: Inrema, S.L., 46460 Silla (ES)
(72) Inventor: ESCARTÍ MOLLA, Jesús, 46460 Silla (ES)
(74) Representative: Carlos Hernando, Borja

(56) References cited:
- EP-A1- 1 558 062
- EP-A2- 1 327 352
- CN-A- 111 879 253
- US-A1- 2020 300 225

## Description

### OBJECT OF THE INVENTION

The invention, a machine for three-dimensional measurement of graphite electrodes, relates to a machine and a method for performing a very precise three-dimensional measurement of the huge cylindrical or nearly cylindrical parts that make up graphite electrodes, enabling calculations to be performed that allow optimal machining of said parts, which is to be performed after measuring, since they have imperfections on the surface thereof that cause the cylinders to not be perfect or have acceptable tolerances for the use of the electrode. After measuring, the electrode can be machined to give it a perfect, standardised cylindrical shape, necessary to be used as an electrode in electric arc furnaces, avoiding the minimum loss of material given the high economic cost thereof.

The machine comprises a positioning and transporting electromechanical part with supporting means for the bases or faces at the ends of the part, clamping means for transferring the same, and three-dimensional scanning means, all of them actuated by servomotors and actuators controlled by a Programmable Logic Controller (PLC) and a Computer Numerical Control (CNC), and an electronic part. The scanning means comprise a mobile structure provided with scanning cameras to recognise the perimeter surface of the part between the two bases or faces thereof and, through the corresponding software, they make it possible to obtain the model of the solid of revolution that can be inscribed in the part and perform the aforementioned calculations through post-processing based on a mathematical algorithm in order to mark the Cartesian and angular axes on the bases or faces at the ends of the part. These will subsequently be used for the machining system to guide the part to obtain the standardised electrode in accordance with the required dimensions and tolerances.

The objective of the invention is to optimise the use of raw material in the manufacture of graphite electrodes for use thereof in electric arc furnaces, in other words, to increase efficiency and performance by improving the Yield Factor parameter, which is understood as the ratio of the weight of the raw electrode before the machining process and the final weight of the electrode once it is machined, i.e., a measure of the use of the raw material.

The field of application of the present invention falls within the sector of the industry dedicated to the manufacture of industrial machinery, focusing particularly on the field of machining graphite electrodes.

### BACKGROUND OF THE INVENTION

As is known, graphite electrodes are used to refine steel in electric arc furnaces. These electrodes act as conductors of electricity in the furnace, generating enough heat to melt scrap, iron ore, or other raw materials used to produce steel or other metals.

A typical alternating current furnace has three electrodes. The electrodes have a round cross-section and, in general, segments with threaded couplings, so that as the electrodes wear, new segments can be added. The arc is formed between the loaded material and the electrode. Thus, the load is heated both by the current that passes through the load and by the radiant energy generated by the arc. The electrodes are automatically raised and lowered by a positioning system, which can be used either by electric lifts or hydraulic cylinders. The regulation system keeps the current and the input power approximately constant during load melting, even though the scrap can move under the electrodes as they melt.

The diameter of the electrode depends on the technical specification of the furnace and the transformer thereof, and they must fit perfectly in the holes of the covers. If the electrode has a diameter larger than the hole, it will not be able to enter the furnace, and if the diameter is smaller, the flames will come out from inside and the efficiency will be reduced. Each furnace is designed to work with electrodes of a certain diameter. For this reason, the diameter is the most important element or feature for differentiating electrodes.

In addition to the technical specification of the furnace and the transformer thereof, users of electrodes choose the dimensions of the product by taking into consideration the type or grade of steel, the target consumption of graphite per tonne of steel, the target consumption of refractory, the target productivity, the melting and refining time per casting, the power level, the slag practice, the type of furnace, the type of scrap or metal load, the load practice, the use of oxygen burners, the cooling of the electrodes, the furnace technology, the furnace emptying system, and the consumption per quantity of processed material.

The better the quality of the electrode, the longer it will last and, consequently, the greater efficiency thereof in the melting process of the material inside the furnace. The larger the diameter, the better the use of coke in the manufacture thereof because the electrodes will be used in harsher applications and will generate greater molten load per unit of time.

Graphite electrodes are manufactured using a special "needle" coke, a byproduct of the oil industry, and tar pitch. The manufacturing process has six phases: moulding, firing, impregnation, annealing, graphitisation and machining. During graphitisation, the product is electrically heated to over 3000°C and is physically transformed into graphite, a crystalline form of carbon and a unique material with low electrical but high heat conductivity, high strength and performance at high temperatures, which makes it suitable for use in electric arc furnaces. The manufacturing time of an electrode is approximately two months. There are no substitute products for graphite electrodes.

To machine graphite electrodes, it is necessary to start with a cylinder, but this cylinder is obtained from a material part that is not completely cylindrical. Therefore, from this part it is necessary to arrive at a cylinder with standard dimensions according to UNE-EN60239:2009, the international equivalent of IEC-60239:2005.

Based on the above, obtaining a cylinder with the largest possible dimensions is of interest to both the client who sells the machined cylinder for use as an electrode and to those who buy it as an end product. The nearly cylindrical material prior to machining is obviously larger than after it is machined; however, there is an interest in achieving the lowest possible loss of material since it has a direct impact on both reducing energy consumption and company profits.

As mentioned, the yield factor is the ratio between the raw product and the machined product, such that the main objective is for the machined product to be as similar as possible to the raw product in terms of quantity of material, in order to thus minimise losses. There is an interest in minimising these losses so that the use of material can be maximised. Therefore, taking into account that one MT of the product has a cost of approximately 3,500 Euros and the electrode usually weighs between 3000 and 4000 kg, the cost of the part will be around 10,000 Euros.

The known machining systems do not have any type of analysis or specific machining method. In the current state of the art, the cylinders are positioned in a machine tool held at the central point of the peripheral faces thereof and machined until a standard diameter is obtained. In most cases, the irregularities and deformations of the raw cylindrical parts prevent the axis used for clamping from coinciding with the optimal axis of the cylinder sought. Currently, the axis of revolution is random such that it is not possible to know the final obtained dimensions of the cylinder. Moreover, the machining programmes used are predetermined to obtain, after machining, the maximum diameter allowed in each of the models. This circumstance, depending on the alignment that the raw electrode has inside the machine, may prevent the desired diameter from being obtained, even though it would have been possible to obtain said diameter with correct alignment of the raw electrode.

Currently, electrode machining is generally performed in two phases or operations, and although there are different alternatives, the sequence in the fully automated processes is usually as follows:

### - Operation 1: Stippling the part and machining the outer diameter

This operation is usually performed on numerical control lathes (CNC) and loading thereon is performed by gantries or Cartesian robots. To load the part on the lathes, it must be pre-centred on conical rollers, which are aligned with the axis of rotation of the main head of the lathe and with the longitudinal axis of the loading gantry. This pre-centring method is robust, reliable and relatively inexpensive. However, it is not efficient, since the use of the material largely depends on the regularity (the similarity) of the raw part to a cylinder. The more the raw part differs from a perfect cylinder, the worse the pre-centring and the worse the yield factor, since it requires greater depth of pass in the turning operation in order to ensure that the entire surface of the part is machined. In other words, the raw part has surface irregularities, or undergoes geometric deformations during the cooling phase, generating ovoid sections along the length, adopting a "banana" shape or similar, and since the part is pre-centred on this area, the pre-centring will be defective and a longer pass will be needed to machine the entire outer surface. This causes a higher percentage of raw material to be wasted. These circumstances are what force manufacturers to increase the starting diameters to try to ensure that the diameters are obtained, and which implies a great loss of raw material and an increase in production costs. - Operation 2: Emptying the housing.

After stippling and lathing the outer diameter thereof, the part is unloaded and goes to the operation of emptying the housing, which consists of facing the ends and threading the housings. Since the outer diameter is machined, the transverse pre-centring works very efficiently, but the effectiveness of longitudinal pre-centring depends on the flatness and perpendicularity of the faces at the ends of the electrode. The worse the pre-centring, the greater the depth of pass that must be given on the facing of the ends to ensure that the surface is completely machined and no raw areas remain.

Therefore, the methods and devices existing in the state of the art do not provide the advantages or benefits that the invention presents. The main differences with the known processes and systems are:
- Gripping and positioning machine or system for scanning and subsequent machining, based on five degrees of freedom (linear movement along three Cartesian axes and rotational movement around two axes),
- 100% scan of the raw cylinder that will form the electrode,
- Definition of the maximum inscribed cylinder to be machined from the raw cylinder,
- Flexible and automated machining based on the diameter of the target cylinder, and
- Existence of an interface system between man and machine.

The fundamental object of the present invention is, therefore, a machine that, installed prior to the cylinder machining station, quickly and effectively performs an exact measurement of the cylindrical part, with the shape and possible irregularities, by three-dimensional scanning of the part in order to be able to calculate the largest cylinder that can be inscribed in the preceding part, reducing the loss of material as much as possible with the aim of the aforementioned yield factor being as close to 1 as possible. Another objective of the present invention is a measurement method.

CN 111879253 A shows an arrangement for 3D measurement of a large cylindrical object formed by a space cabin comprising a laser scanner movably arranged on a circular support which is adapted to be displaced along the longitudinal axis of the cabin in order to measure its 3D shape.

### DESCRIPTION OF THE INVENTION

The object of the present invention, a machine for three-dimensional measuring of graphite electrodes, is a machine according to claim 1.

In particular, the machine object of the invention is a machine whose purpose is to enable performing a very precise three-dimensional measurement of a graphite part, between 3000 and 4000 kg, and up to a length of 3.5 metres and with a diameter of up to 900 mm, which is nearly cylindrical, or essentially cylindrical with imperfections, and which makes up the graphite electrodes after it is machined. Said parts are, as mentioned, nearly cylindrical and have large dimensions, but since they are not perfectly cylindrical and do not comply with standardised dimensions, they cannot be used as electrodes. Therefore, it is necessary to machine said graphite parts to convert them into electrodes whose dimensions fall within the applicable regulations and, at the same time, so that the material possibly lost as a result of this machining is as small as possible; in other words, maximising the yield factor between raw material and machined material to thus achieve economic savings.

The machine for three-dimensional measuring of an imperfect cylindrical part in terms of the shape thereof, made of graphite, between 3000 kg and 4000 kg for electrodes, with two bases or faces and an outer surface therebetween, comprises:
- transport and positioning means that act on the outer surface of the part,
- clamping means that act on the two bases or faces of the part,
- three-dimensional scanning means of the outer surface of the part, and
- a processor connected to the transport, positioning and clamping means for the control thereof, as well as to the scanning means to perform a three-dimensional measurement of the part, determining the Cartesian and angular axes at the ends of the part, in order to calculate the axis of revolution of the cylinder with the largest possible dimensions that can be inscribed in said part, properly correcting the position of the axis of the raw electrode for the subsequent placement thereof in the machine that performs the machining.

The machine therefore comprises a mainly electromechanical part for the transfer and support of the graphite parts, with transport and positioning means of the part to clamping means that act on the bases or faces of the part, and all these means being driven by servomotors and actuators controlled by the numerical control processor (CNC). Likewise, the machine comprises a mainly digital measuring part, for the three-dimensional measuring of the graphite part, comprising a structure, preferably a ring, provided with a plurality of scanning cameras to scan the surface of the part. Said structure also entails a mobile electromechanical element that moves longitudinally from one end of the part to another, between the side clamping means thereof, and that, by means of the corresponding software implemented in the numerical control processor (CNC), or computer of the machine, and based on the information collected by the scanning means, enables the necessary calculations to be performed, marking Cartesian and angular axes at the ends of the part which will be used to perform and guide the optimal machining of the same in a subsequent phase.

The preceding means that form the machine object of the invention are integrated into a support structure, or frame, capable of withstanding the weight of the part, as well as the means that form the machine, and the stresses that they may undergo. In any case, the control processor could be arranged outside said support structure or frame.

Therefore, the machine comprises, coupled to said support structure or frame, at least:
- Transport and positioning means of the part, with at least two parallel grippers that clamp the part on the outer surface thereof along the length thereof and move it until it is positioned between the clamping means of the part.
- Clamping means for clamping the part by the bases or faces thereof, with two stops or side supports, each one located on the machine opposite each other, and which can be longitudinally moved to move closer to and away from each other, once the part is located between both. The grippers will arrange the part between both stops or supports and they will move closer to each other until the bases or faces of the part are pressed, thus clamping the same, and at which time the grippers are removed.
- Scanning means, comprising at least one mobile structure, preferably a ring, which can be moved along the perimeter of the outer surface of the part, and provided with several scanning cameras coupled to said structure. The structure has dimensions, and in the case that this structure is a ring, a diameter, which are greater than the base of the part that will make up the electrode in order to be able to recognise the outer surface of the part. The part is arranged inside the structure, which preferably surrounds it completely, in order to be able to recognise the entire outer surface thereof, and it has longitudinal movement means that enable the mobile scanning structure to travel along the part, located therein, between both bases or faces. The scanning cameras are preferably arranged on the inside of the structure oriented towards the axis of the part.

The scanning cameras, which preferably consist of scanning heads with a resolution greater than 500 µm, send the readings to the control processor which, by means of a specific mathematical algorithm, enables the three-dimensional image of the electrode to be obtained, the maximum cylinder inscribed in the scanned solid to be calculated and the axis of revolution of the same to be defined, which will be used for subsequent machining. Therefore, the machine object of the present invention enables:
- The 100% scan of the raw cylinder by the described electrode scanning system (raw cylinder). This scanning of the raw cylinder will first enable the real geometry of the cylinder to be known, since cylinders are not perfect, but rather tend to be "banana" shaped or have oval deformations. The unknown nature of the exact geometry of the raw cylinder generates greater graphite waste in machining, since the points chosen as axes on the two bases or faces of the cylinder are not necessarily the optimum axis of revolution. Secondly, the scanning of the raw cylinder enables the surface defects of the cylinder to be known, as well as the depth thereof, revealing the minimum recess required to obtain a uniform cylinder of the desired quality.
- Definition of the maximum inscribed cylinder, by means of an algorithmic system with the data cloud provided by the data scan that enables the maximum inscribed cylinder in the raw cylinder to be obtained. The possibility of obtaining the maximum inscribed cylinder of the inside will enable the end product sought and obtained to be known from the outset. Likewise, it will enable, by means the handling device, the axis of the raw electrode to coincide with the axis of revolution that allows for the maximum inscribed cylinder, improving the efficiency of the yield factor and minimising the graphite waste in machining. As a final consequence, cylinders with a larger diameter are obtained. It must be taken into account that the price of graphite electrodes is directly proportional to the weight variable, such that reducing waste in graphite machining improves direct profits from the product.
- Gripping and positioning for the machining based on five degrees of freedom, three Cartesian axes and two angular axes. The loading and positioning system is based on grippers with five degrees of freedom, which enables the cylinder to be positioned in such a way that the side gripping points of the electrode coincide with the end points of the axis of revolution of the maximum inscribed cylinder, thus minimising graphite waste and obtaining cylinders of a maximum diameter.
- Flexible and automated machining based on the diameter of the target cylinder which enables programs to be automatically adapted to the diameter obtained by simulating the inscribed cylinder, adjusting the machining to the maximum diameter, without unnecessary loss of material or time.
- Communication between the operator and the machine via an interface adapted through a computer program that enables the data to be displayed in three dimensions (3D) and said data and variables to be interpreted.

Based on the foregoing, the three-dimensional measurement method carried out by the machine comprises the following general steps:
1. Arrangement of the approximately cylindrical part between the side clamping means,
2. 100% scan of the approximately cylindrical part, and
3. Calculation of the maximum regular cylinder inscribed inside the scanned part.

More particularly, the process comprises the following steps:
a) Positioning of the part to be measured under the machine,
b) Downward vertical movement of the transport and positioning means until the part is located between them,
c) Horizontal movement of the transport and positioning means, moving closer to each other and pressing the part on the outer surface thereof,
d) Raising of the part until it is at the height of the side clamping means
e) Longitudinal movement of the side clamping means until they come into contact with the bases or faces of the part,
f) Horizontal movement of the transport and positioning means, moving away from each other and no longer pressing the part on the outer surface thereof,
g) Upward vertical movement of the transport and positioning means,
h) Longitudinal movement of the scanning means along the length of the part, scanning the outer surface thereof and gathering data related to the shape thereof,
i) Sending of the data to the processor for processing of the same by means of a computer program and the subsequent calculation, by means of this processor or another additional one, of the cylinder of maximum dimensions inscribed in the part,
j) Reverse implementation of steps g) to a) for recovering the part.

Regarding these specific steps, steps a) to g) correspond to general step 1), step h) corresponds to general step 2) and step i) corresponds to general step 3).

Through the preceding method, and due to the formation of the machine and the components thereof, the scanning time of the part is reduced to less than 35 seconds, while the entire process, including handling the part and scanning, is reduced to less than 185 seconds.

Subsequently, the part is transferred to a machining machine in order to machine the part and obtain the cylindrical electrode with the largest dimensions possible inscribed in said part.

From the foregoing, and after having scanned and obtained the data from the part, the processor of the machine, or another, implements the following method in order to obtain the three-dimensional dimensions of said raw graphite part and calculate the largest cylinder inscribed therein:
- Processing of the dimensions of the raw part and calculating the maximum cylinder inscribed therein, by means of a specific computer program that runs a mathematical algorithm from the image obtained with the information gathered by the scanning elements,
- Locating the axial axis of said maximum inscribed cylinder,
- Obtaining and placing, on each face of the part, the five degrees of freedom or axes (3 Cartesian and two angular axes) that will be used as a guide for the subsequent machining of the outer surface of the raw part with the aim of obtaining the maximum cylinder inscribed in the part and therefore the largest possible cylinder as an electrode.

Furthermore, through the aforementioned computer program implemented in the computer of the machine, each of the different electromechanical elements can be calibrated based on the dimensions and weight of the part in each case.

### DESCRIPTION OF THE DRAWINGS

To complete the description of the present invention for the purpose of helping to make the features of the same more readily understandable, a set of figures is included by way of illustration and not limitation.
Figure 1 shows a diagram of the machine with the grippers and the different degrees of freedom thereof.
Figure 2 shows a diagram of the machine and specifically the components for scanning.
Figure 3 shows a perspective view of a portion of the machine of the invention, specifically the lower portion thereof, represented in the phase of clamping the electrode with the grippers with which it is provided, the configuration and arrangement thereof being shown.
Figures 4 and 5 show respective side elevation views of the machine, in respective phases of placing the electrode between the clamping supports at the ends (Figure 2) and clamping the electrode by means of said supports (Figure 3).
Figure 6 shows a side elevation view of the machine in the phase of measuring via the movement of the ring with scanning elements.
Figure 7 shows a perspective view of the machine, in the measuring phase shown in the preceding figure.
Figure 8 shows a perspective view of the ring that shows in greater detail the configuration and arrangement of the scanning elements that make up the three-dimensional digital measuring means of the machine.
Figure 9 shows a perspective view of the upper portion of the machine, the structure on which the movement mechanisms of the grippers are supported being shown.
Figure 10 shows a schematic view of the representation of the three-dimensional image obtained from the scanned electrode, showing the imperfections on the surface.
Figure 11 shows the Cartesian and rotational axes that are marked at the ends of the electrode after measuring it with the machine.

### PREFERRED EMBODIMENT OF THE INVENTION

In view of the aforementioned figures, the machine (1) object of the present invention for performing a very precise three-dimensional measurement of a cylindrical and imperfect graphite part (3), between 3000 and 4000 kg, and for performing the calculations that enable it to be machined to obtain the maximum perfect cylinder inscribed in said part (3) used as an electrode, provides:
- An electromechanical part for supporting, clamping and transferring parts weighing around 4000 kg, comprising transport and positioning means (2) for the part (3) to clamping supports (6) of the part by the ends thereof, all of them driven by servomotors and actuators controlled by a processor, preferably CNC (not shown).
- And a three-dimensional digital measuring part comprising a plurality of scanning cameras (9) of the surface of the part (3) and which, by means of specific software implemented in the control CNC or computer of the machine (1), and based on the information gathered by said scanning cameras (9), enable the aforementioned calculations to be performed and Cartesian and angular axes to be marked at the ends of the part (3) for subsequent guidance in the machining machine.

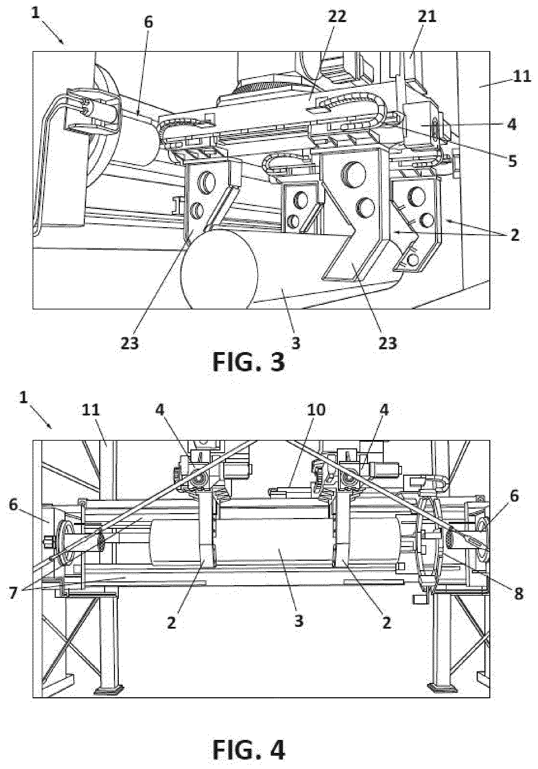

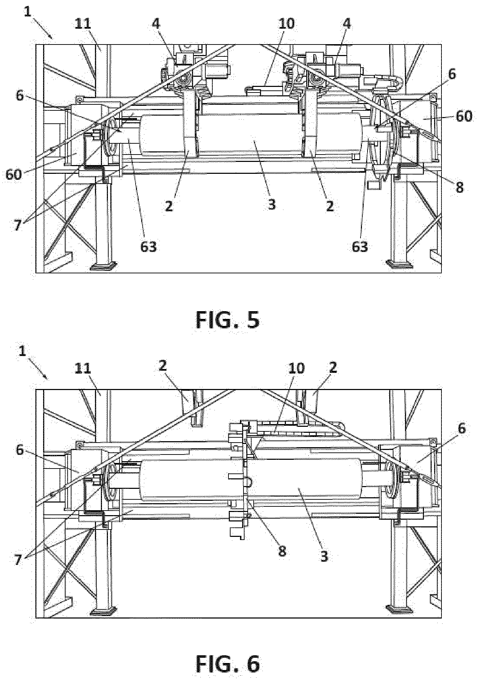

More specifically, the preferred embodiment of machine (1) comprises the following:
- Transport and positioning means (2) of the nearly cylindrical part (3) that will make up the electrode after it is machining, and which preferably consist of at least two grippers (2) that, actuated through corresponding servomotors (4) and actuators (5), can clamp said part (3) horizontally at two points on the outer surface thereof and move it until it is positioned between two side clamping supports (6) provided at two opposite ends of the machine (1),
- The clamping supports (6) of the part (3) preferably consist of two side supports (6) that, facing each other, can move longitudinally along horizontal guides (7) to thus move closer to and away from each other from both side ends of the machine (1) and towards the centre thereof, each one pressing one face of the part (3). Said supports are moved using the servomotors and actuators (not shown), such that once the part (3) is located between both side supports (6), moved to that position by the grippers (2), the supports (6) move closer to each other and press the ends of the part (3) by the bases or faces thereof with enough force to clamp said part (3) and hold it by the bases or faces thereof when the grippers (2) are removed. Figures 4 and 5 show the position of said side supports (6) before and after moving closer together and pressing the ends of the part (3) to hold it by the same. Figure 5 shows how said supports (6) support the part (3) without the grippers (2).
- And a mobile scanning structure, preferably a ring (8), which is provided with scanning cameras (9) coupled to the inner portion of said ring and which, by means of a second horizontal guide, preferably with a rack (10) (65), moves longitudinally from one end to another of the machine (1) and from one base to another of the part (3) between both clamping supports (6) to travel along the part (3) between both ends of the same when it is arranged between said side supports (6).

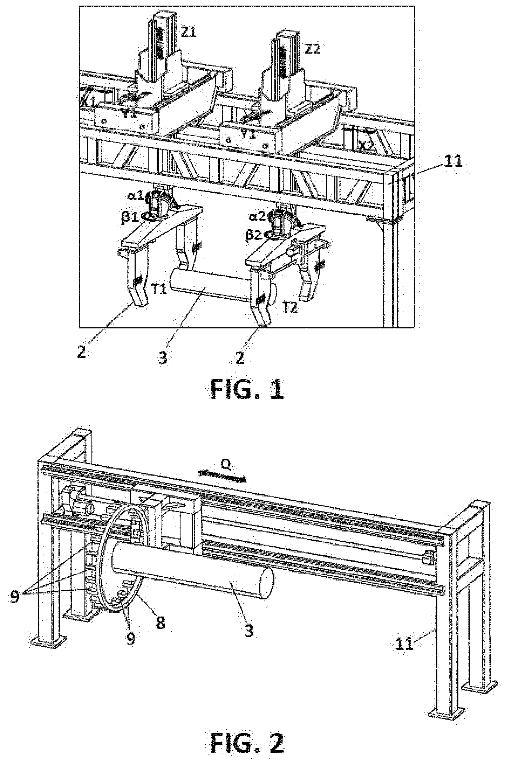

Figure 1 shows the described transport and positioning means used for handling, loading and unloading the raw electrode in the machine. It has two completely independent gantry arms that allow for travel along the 3 axes, X, Y, Z (Cartesian linear movements) and at the lower end of each arm there is a joint or wrist with two angular axes α and β actuated by servomotors controlled by numerical control (CNC). In other words, the loading system has 5 plus 5 independent axes, 5 on each arm. These 5+5 degrees of freedom are necessary to enable the electrode to be moved and angularly oriented in any necessary position when it is positioned to be machined in the machining station or machine.

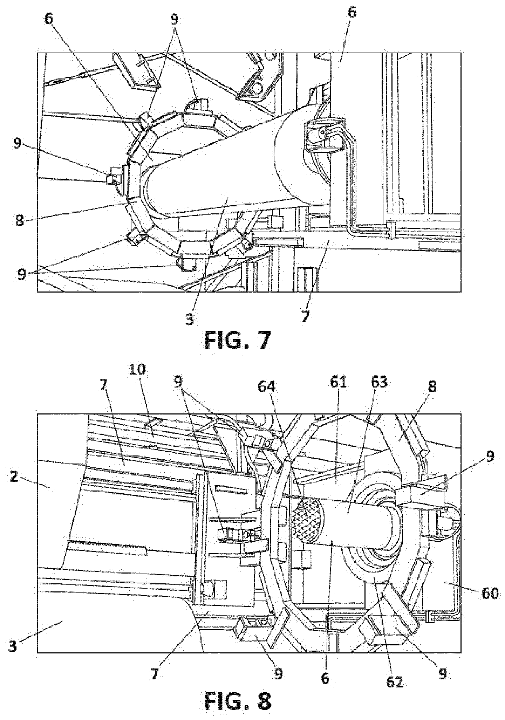

As can be seen in Figures 2 and 8, said ring (8) has a closed polygonal hollow with a diameter greater than the diameter of the cylindrical part (3) that will make up the electrode, such that after the part is inside the ring, this ring surrounds it around the perimeter at a certain distance with the scanning cameras (9), which preferably consist of several scanning heads with a resolution greater than 500 µm, arranged radially and oriented towards the centre of the ring (8) to simultaneously focus the readings thereof over the entire perimeter of the cylindrical surface of the part (3).

As can be seen in Figures 5 and 6, and also in the aforementioned Figure 8, the side supports (6) that form the clamping means (6) of the machine for holding the part (3) by the ends thereof, preferably comprise, in both cases, a support block (60), which is attached to the guides (7) through a structural support (61), on the inside face of which it incorporates a circular platform (62) from which a solid lug (63) emerges, the distal end of which is provided with a rough surface (64) designed to offer greater clamping on the surface of the ends of the part (3) when it presses on the same to clamp it between both supports (6).

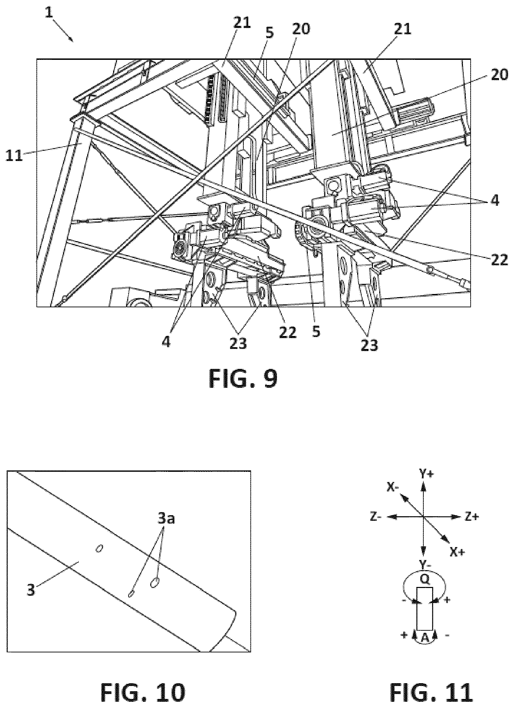

Moreover, as can be seen in Figure 1 and Figure 9, the grippers (2) that form the transport and positioning means (2) of the part (3) are each formed from a vertical arm (20), with vertical and horizontal linear movement, integrated in an upper clamping structure (21), which in turn is supported in a support structure or frame (11), of metal beams of the machine (1). In the lower portion of said vertical arm (20) there is a crossbar (22) from which the two grippers (2) hang with two self-centring V's (23) that have horizontal linear movement, perpendicular to that of the supports (6), which moves the self-centring V's (23), and therefore the grippers (2), closer or farther away from each other to press and clamp the part (3) on opposite sides of the outer perimeter surface thereof. Given the V-shape (23) of the grippers (2) when closed, the electrode will be centred as it moves towards the centre of the V.

Based on the foregoing, the method implemented by the machine comprises the following steps:
a) Positioning of the part to be measured under the machine,
b) Downward vertical movement of the transport and positioning means until the part is located between them,
c) Horizontal movement of the transport and positioning means, moving closer to each other and pressing the part on the outer surface thereof,
d) Raising of the part until it is at the height of the side clamping means,
e) Longitudinal movement of the side clamping means until they come into contact with the bases or faces of the part,
f) Horizontal movement of the transport and positioning means, moving away from each other and no longer pressing the part on the outer surface thereof,
g) Upward vertical movement of the transport and positioning means,
h) Longitudinal movement of the scanning means along the length of the part, scanning the outer surface thereof and gathering data related to the shape thereof,
i) Sending of the data to the processor for processing of the same by means of a computer program and the subsequent calculation, by means of this processor or another additional one, of the cylinder of maximum dimensions inscribed in the part,
j) Reverse implementation of steps g) to a) for recovering the part.

Subsequently, the part is transferred to a machining machine in order to machine the part and obtain the cylindrical electrode with the largest dimensions possible inscribed in said part.

Figures 10 and 11 show, respectively, a representation of the three-dimensional image of the part (3) which is obtained on the computer screen of the machine from the readings made by the scanning elements (9), wherein the imperfections (3a) that may be on the surface thereof and that are those that will limit the dimension of the maximum inscribed cylinder to be machined are shown, and a representation of the Cartesian axes (X, Y, Z) and the angular axes (A, Q) that will be marked at the ends of the part (3) based on the calculations performed by the computer software with the information of the three-dimensional measurement performed, in order to machine the part (3).

## Claims

1. A machine for three-dimensional measurement of an imperfect graphite cylindrical part (3) of between 3000 kg and 4000 kg for electrodes, with two bases or faces and an outer surface therebetween, **characterised in that** it comprises:
- transport and positioning means (2) that is adapted to act on the outer surface of the part (3)
- clamping means (6) that is adapted to act on the two bases or faces of the part (3)
- three-dimensional scanning means (9) for 3D scanning of the outer surface of the part (3), and
- a processor connected to the transport, positioning (2) and clamping (6) means for the control thereof, as well as to the scanning means (9) to perform a three-dimensional measurement of the outer surface of the clamped part (3), determining the Cartesian and angular axes at the ends of the part (3) on the basis of the 3D measurement, in order to calculate the axis of revolution of the cylinder with the largest possible dimensions that can be inscribed in said part (3) in order to subsequently obtain it by the machining thereof.

2. The machine, according to claim 1, **characterised in that** the clamping means (6) comprise two side supports (6) located at the two opposite longitudinal ends of the machine and longitudinal movement means (7) to decrease or increase the distance between both supports (6), increasing or decreasing the pressure in a controlled manner on the faces of the part (3).

3. The machine, according to any of the preceding claims, **characterised in that** the transport and positioning means (2) comprise grippers (2) actuated through corresponding motors (4) and actuators (5), capable of clamping said part (3) by the outer surface thereof and moving it until it is located between the clamping means (6).

4. The machine, according to any of the preceding claims, **characterised in that** the scanning means (9) comprise at least one measuring structure (8) with scanning cameras (9) arranged on the structure (8) and a horizontal longitudinal guide for moving the structure (8) between both bases or faces of the part (3) when the same is arranged between the side stops (6).

5. The machine, according to claim 4, **characterised in that** the structure (8) is closed with an interior hollow of dimensions greater than the diameter of the part (3) to be measured and with the scanning cameras (9) located on the interior wall of said structure (8) oriented towards the centre of the same.

6. The machine, according to any of claims 4 or 5, **characterised in that** the scanning cameras (9) are scanning heads with a resolution of 300 µm.

7. The machine, according to any of the preceding claims, **characterised in that** the side stops (6) comprise a support block (60) attached to the longitudinal movement means (7) through a structural support (61), incorporating on the inner face thereof a circular platform (62) from which a solid lug (63) emerges with the distal end thereof provided with a rough surface (64) to offer greater clamping on the surface of the bases or faces of the part (3) when they exert pressure on the same to clamp it between both stops (6).

8. The machine, according to any of the preceding claims, **characterised in that** each of the grippers (2) comprises a vertical arm (20), provided with vertical and horizontal linear movement, with a crossbar (22) in the lower portion thereof with two self-centring V's (23) provided with horizontal linear movement that moves them closer to or away from each other to surround and press the part (3) on the surface thereof.

9. A method for three-dimensional measurement of an imperfect cylindrical graphite part between 3000 kg and 4000 kg for electrodes, according to the machine of claim 1,
**characterised in that** it comprises the following steps:
a) Positioning of the part to be measured under the machine,
b) Downward vertical movement of the transport and positioning means until the part is located between them,
c) Horizontal movement of the transport and positioning means, moving closer to each other and pressing the part on the outer surface thereof,
d) Raising of the part until it is at the height of the side clamping means,
e) Longitudinal movement of the side clamping means until they come into contact with the bases or faces of the part,
f) Horizontal movement of the transport and positioning means, moving away from each other and no longer pressing the part on the outer surface thereof,
g) Upward vertical movement of the transport and positioning means,
h) Longitudinal movement of the scanning means along the length of the part, scanning the outer surface thereof and gathering data related to the shape thereof,
i) Sending of the data to the processor for processing of the same by means of a computer program and the subsequent calculation, by means of this processor or another additional one, of the cylinder of maximum dimensions inscribed in the part,
j) Reverse implementation of steps g) to a) for recovering the part.

## Patentansprüche

1. Maschine zur dreidimensionalen Messung eines unvollkommenen zylindrischen Graphitteils (3) von zwischen 3000 kg und 4000 kg für Elektroden, mit zwei Basen oder Flächen und einer Außenoberfläche dazwischen, **dadurch gekennzeichnet, dass** es Folgendes umfasst:
- Transport- und Positionierungsmittel (2), die dazu angepasst sind, auf die Außenoberfläche des Teils (3) einzuwirken
- Klemmmittel (6), die dazu angepasst sind, auf die zwei Basen oder Flächen des Teils (3) einzuwirken
- dreidimensionale Abtastmittel (9) zum 3D-Abtasten der Außenoberfläche des Teils (3), und
- einen Prozessor, der mit den Transport-, Positionierungs- (2) und Klemmmitteln (6) zu deren Steuerung sowie mit den Abtastmitteln (9) verbunden ist, um eine dreidimensionale Messung der Außenoberfläche des eingeklemmten Teils (3) durchzuführen, die kartesische Achse und die Winkelachse an den Enden des Teils (3) basierend auf der 3D-Messung zu bestimmen, um die Rotationsachse des Zylinders mit den größtmöglichen Abmessungen, die in das Teil (3) eingeschrieben werden können, zu berechnen, um es anschließend durch maschinelle Bearbeitung zu erhalten.

2. Maschine nach Anspruch 1, **dadurch gekennzeichnet, dass** die Klemmmittel (6) zwei Seitenstützen (6) umfassen, die an den zwei entgegengesetzten Längsenden der Maschine liegen, und Längsbewegungsmittel (7), um den Abstand zwischen beiden Stützen zu verringern oder zu vergrößern (6), wodurch der Druck auf die Flächen des Teils (3) in einer kontrollierten weise erhöht oder verringert wird.

3. Maschine nach einem der vorstehenden Ansprüche, **dadurch gekennzeichnet, dass** die Transport- und Positionierungsmittel (2) Greifer (2) umfassen, die durch entsprechende Motoren (4) und Aktuatoren (5) betätigt werden, die in der Lage sind, das Teil (3) durch die Außenoberfläche davon zu klemmen und es zu bewegen, bis es zwischen den Klemmmitteln (6) liegt.

4. Maschine nach einem der vorstehenden Ansprüche, **dadurch gekennzeichnet, dass** die Abtastmittel (9) mindestens eine Messstruktur (8) mit Abtastkameras (9), die an der Struktur (8) eingerichtet sind, und eine horizontale Längsführung zum Bewegen dieser Struktur (8) zwischen beiden Basen oder Flächen des Teils (3) umfassen, wenn dieses zwischen den Seitenanschlägen (6) eingerichtet ist.

5. Maschine nach Anspruch 4, **dadurch gekennzeichnet, dass** die Struktur (8) mit einem Innenhohlraum geschlossen ist, dessen Abmessungen größer als der Durchmesser des zu messenden Teils (3) sind, und wobei die Abtastkameras (9), die an der Innenwand der Struktur (8) liegen, zu deren Mitte hin ausgerichtet sind.

6. Maschine nach einem der Ansprüche 4 oder 5, **dadurch gekennzeichnet, dass** die Abtastkameras (9) Abtastköpfe mit einer Auflösung von 300 µm sind.

7. Maschine nach einem der vorstehenden Ansprüche, **dadurch gekennzeichnet, dass** die Seitenanschläge (6) einen Stützblock (60) umfassen, der an den Längsbewegungsmitteln (7) durch eine strukturelle Stütze (61) angebracht ist, an deren Innenfläche eine kreisförmige Plattform (62) eingebaut ist, aus der ein massiver Ansatz (63) austritt, dessen distales Ende mit einer rauen Oberfläche (64) versehen ist, um eine stärkere Klemmung an der Oberfläche der Basen oder Flächen des Teils (3) zu bieten, wenn diese Druck darauf ausüben, um es zwischen den beiden Anschlägen (6) einzuklemmen.

8. Maschine nach einem der vorstehenden Ansprüche, **dadurch gekennzeichnet, dass** jeder der Greifer (2) einen vertikalen Arm (20) umfasst, der mit vertikaler und horizontaler linearer Bewegung versehen ist, mit einer Querstange (22) in seinem unteren Abschnitt mit zwei selbstzentrierenden Vs (23), die mit einer horizontalen linearen Bewegung versehen sind, die sie näher zueinander oder voneinander weg bewegt, um das Teil (3) zu umgeben und an dessen Oberfläche zu drücken.

9. Verfahren zur dreidimensionalen Messung eines unvollkommenen zylindrischen Graphitteils zwischen 3000 kg und 4000 kg für Elektroden, gemäß der Maschine nach Anspruch 1, **dadurch gekennzeichnet, dass** es die folgenden Schritte umfasst:
a) Positionieren des zu messenden Teils unter der Maschine.
b) Vertikale Abwärtsbewegung der Transport- und Positionierungsmittel, bis das Teil zwischen ihnen liegt.
c) Horizontale Bewegung der Transport- und Positionierungsmittel, wobei sie sich einander annähern und das Teil an die Außenoberfläche davon drücken.
d) Anheben des Teils, bis es sich auf der Höhe der seitlichen Klemmmittel befindet.
e) Längsbewegung der seitlichen Klemmmittel, bis sie mit den Basen oder Flächen des Teils in Kontakt kommen.
f) Horizontale Bewegung der Transport- und Positionierungsmittel, die sich voneinander entfernen und das Teil nicht mehr auf die Außenfläche davon drücken.
g) Vertikale Aufwärtsbewegung der Transport- und Positionierungsmittel.
h) Längsbewegung der Abtastmittel entlang der Länge des Teils, Abtasten der Außenoberfläche davon und Sammeln von Daten bezüglich der Form davon.
i) Senden der Daten an den Prozessor zu deren Verarbeitung mittels eines Computerprogramms und anschließender Berechnung des Zylinders mit maximalen Abmessungen, der in das Teil eingeschrieben ist, mittels dieses Prozessors oder eines anderen zusätzlichen.
j) Umgekehrte Implementierung der Schritte g) bis a) zur Rückgewinnung des Teils.

## Revendications

1. Machine pour la mesure tridimensionnelle d'une pièce cylindrique en graphite imparfaite (3) comprise entre 3000 kg et 4000 kg pour électrodes, avec deux bases ou faces et une surface externe entre celles-ci, **caractérisée en ce qu'**elle comprend :
- un moyen de transport et de positionnement (2) qui est adapté à agir sur la surface externe de la pièce (3)
- un moyen de serrage (6) qui est adapté à agir sur les deux bases ou faces de la pièce (3)
- des moyens de balayage tridimensionnel (9) pour réaliser un balayage 3D de la surface externe de la pièce (3), et
- un processeur connecté aux moyens de transport, de positionnement (2) et de serrage (6) pour leur commande, ainsi qu'au moyen de balayage (9) pour effectuer une mesure tridimensionnelle de la surface externe de la pièce (3) serrée, déterminant les axes cartésien et angulaire au niveau des extrémités de la pièce (3) en fonction de la mesure 3D, afin de calculer l'axe de révolution du cylindre avec les plus grandes dimensions possibles pouvant être inscrites dans ladite pièce (3) pour l'obtenir ultérieurement par l'usinage de celle-ci.

2. Machine, selon la revendication 1. **caractérisée en ce que** les moyens de serrage (6) comprennent deux supports latéraux (6) situés au niveau des deux extrémités longitudinales opposées de la machine et des moyens de déplacement longitudinal (7) pour diminuer ou augmenter la distance entre les deux supports (6), augmentant ou diminuant la pression de manière contrôlée sur les faces de la pièce (3).

3. Machine, selon l'une quelconque des revendications précédentes, **caractérisée en ce que** les moyens de transport et de positionnement (2) comprennent des pinces (2) actionnées par des moteurs (4) et des actionneurs (5) correspondants, aptes à serrer ladite pièce (3) par sa surface externe et à la déplacer jusqu'à ce qu'elle se situe entre les moyens de serrage (6).

4. Machine, selon l'une quelconque des revendications précédentes, **caractérisée en ce que** les moyens de balayage (9) comprennent au moins une structure de mesure (8) avec des caméras de balayage (9) agencées sur la structure (8) et un guide longitudinal horizontal pour déplacer la structure (8) entre les deux bases ou faces de la pièce (3) lorsque celle-ci est agencée entre les butées latérales (6).

5. Machine, selon la revendication 4, **caractérisée en ce que** la structure (8) est fermée par un creux intérieur de dimensions supérieures au diamètre de la pièce (3) à mesurer et avec les caméras de balayage (9) situées sur la paroi intérieure de ladite structure (8) orientées vers le centre de celui-ci.

6. Machine, selon l'une des revendications 4 ou 5, **caractérisée en ce que** les caméras de balayage (9) sont des têtes de balayage avec une résolution de 300 µm .

7. Machine, selon l'une quelconque des revendications précédentes, **caractérisée en ce que** les butées latérales (6) comprennent un bloc support (60) fixé aux moyens de déplacement longitudinal (7) par l'intermédiaire d'un support structurel (61), incorporant sur sa face interne une plateforme circulaire (62) d'où émerge un ergot plein (63) dont l'extrémité distale est munie d'une surface rugueuse (64) pour offrir un plus grand serrage à la surface des bases ou faces de la pièce (3) lorsqu'ils exercent une pression sur celle-ci pour la serrer entre les deux butées (6).

8. Machine, selon l'une quelconque des revendications précédentes, **caractérisée en ce que** chacune des pinces (2) comprend un bras vertical (20), doté d'un mouvement linéaire vertical et horizontal, avec une barre transversale (22) dans sa partie inférieure avec deux V autocentrants (23) dotés d'un mouvement linéaire horizontal qui les rapproche ou les éloigne l'un de l'autre pour entourer et presser la pièce (3) sur sa surface.

9. Procédé de mesure tridimensionnelle d'une pièce cylindrique en graphite imparfaite comprise entre 3000 kg et 4000 kg pour électrodes, conformément à la machine de la revendication 1, **caractérisé en ce qu'**il comprend les étapes suivantes :
a) Positionnement de la pièce à mesurer sous la machine.
b) Déplacement vertical vers le bas des moyens de transport et de positionnement jusqu'à ce que la pièce se situe entre eux.
c) Déplacement horizontal des moyens de transport et de positionnement, en les rapprochant l'un de l'autre et en pressant la pièce sur sa surface externe.
d) Élévation de la pièce jusqu'à ce qu'elle soit à hauteur des moyens de serrage latéraux.
e) Déplacement longitudinal des moyens de serrage latéraux jusqu'à ce qu'ils viennent en contact avec les bases ou faces de la pièce.
f) Déplacement horizontal des moyens de transport et de positionnement, en les écartant l'un de l'autre et en ne pressant plus la pièce sur sa surface externe.
g) Déplacement vertical vers le haut des moyens de transport et de positionnement.
h) Déplacement longitudinal des moyens de balayage sur la longueur de la pièce, balayant sa surface externe et collectant des données liées à sa forme.
i) Envoi des données au processeur pour traitement de celles-ci au moyen d'un programme informatique et calcul ultérieur, au moyen de ce processeur ou d'un autre supplémentaire. du cylindre de dimensions maximales inscrit dans la pièce.
j) Mise en oeuvre inverse des étapes g) à a) pour la récupération de la pièce.
